# EUROPÄISCHE PATENTANMELDUNG

(11) **EP 2 992 790 A1**
(43) Veröffentlichungstag der Anmeldung: **09.03.2016**
(21) Anmeldenummer: 14183393.9
(22) Anmeldetag: 03.09.2014
(51) Int. Cl.: A47J 31/06, A47J 31/36

(54) **Kapseladapter**

(71) Anmelder: BEEM, 61191 Rosbach v.d.H. (DE)
(72) Erfinder: Mehshat, Bijan, 61273 Wehrheim (DE)
(74) Vertreter: Patentanwälte Olbricht Buchhold Keulertz

(57) **Zusammenfassung**

Die Erfindung betrifft einen Kapseladapter (1) für einen Siebträger einer Kaffeemaschine, mit einem nach unten offenen Aufnahmeraum (4) für eine Kaffeekapsel, der durch einen Deckel (19) verschließbar ist. Der Kapseladapter weist ein Kopfteil (3) und ein Bodenteil (2) auf und der Aufnahmeraum (4) ist im Bodenteil (2) ausgebildet.

An der dem Kopfteil (3) zugewandten Seite (5) des Bodenteils (2) sind in den Aufnahmeraum (4) hinein ragende Einstechmittel (6, 7) zum Einstechen in eine im Aufnahmeraum (4) aufgenommene Kaffeekapsel angeordnet.

## Beschreibung

Die Erfindung betrifft einen Kapseladapter für einen Siebträger einer Kaffeemaschine gemäß dem Oberbegriff von Anspruch 1.

Kaffeemaschinen mit Siebträger, die zusammenfassend auch Siebträger-Kaffeemaschinen genannt werden, sind seit Jahren bekannt. Dabei wird der Siebträger mittels eines Bajonettverschlusses druckfest mit der Kaffeemaschine verbunden. Zur Kaffeezubereitung wird im Siebträger Kaffeepulver eingefüllt, der anschließend an die Kaffeemaschine angeschlossen wird. Durch den Siebträger mit dem Kaffeepulver wird dann unter Druck stehendes heißes Wasser geleitet. Dieses Wasser fließt dabei von oben in den Siebträger hinein und durch den Kaffee sowie einem Sieb zu einer Öffnung im Boden des Siebträgers, aus der schließlich der fertig gebrühte Kaffee in eine darunter gestellte Tasse gelangt.

Mit derartigen Siebträger-Kaffeemaschinen lässt sich sehr hochwertiger Kaffee herstellen. Allerdings erfordert die Befüllung des Siebträgers und die anschließende Reinigung relativ viel Zeit.

Daher haben sich mehr und mehr auch Kaffeemaschinen verbreitet, bei denen der Kaffee in Kapseln vorportioniert wird, die in entsprechende Aufnahmen der Kaffeemaschinen eingesetzt werden können.

Es gibt verschiedene Arten von Kapseln. Viele Kapseln werden vollständig aus einem Wasser undurchlässigen Material hergestellt, um möglichst lange die Frische des Kaffees garantieren zu können. Diese Kapseln müssen in der Kaffeemaschine oberseitig und unterseitig perforiert werden, damit das heiße Wasser in die Kapsel gelangen und der aufgebrühte Kaffee auf der anderen Seite aus der Kapsel heraus fließen kann. Dafür sind entsprechende Aufstechelemente, in der Regel Dorne, in der Kaffeemaschine erforderlich, die beispielsweise über einen Hebel aufeinander zu bewegt werden, um die Kapsel zu perforieren. Es gibt aber auch Kapseln, die zumindest teilweise aus Materialien bestehen, die Wasser durchlässig sind. Bei diesen Bauformen kann auf Aufstechelemente verzichtet werden.

Um auch bei den Siebträger-Kaffeemaschinen mit geringem Aufwand einen Kaffee brühen zu können, wird beispielsweise in DE 10 2013 008 894 A1 ein Kapseladapter vorgeschlagen, der in einen Siebträger eingesetzt werden kann und zur Aufnahme einer Kapsel geeignet ist. Die Kapsel wird dabei in einen Aufnahmeraum eingesetzt, der in einem Bodenteil des Kapseladapters ausgebildet ist. Anschließend wird der Aufnahmeraum mit einem Deckel verschlossen, wodurch Einstechmittel an der Innenseite des Deckels sowie weitere Einstechmittel, die sich an einem mit dem Bodenteil verbundenen Kopfteil befinden und sich von oben in den Aufnahmeraum erstrecken, in die Kapsel eindringen. Beim Zusammenbau von Kopfteil und Bodenteil ist also auf eine genaue Ausrichtung dieser beiden Elemente zueinander zu achten. Ferner ist die Herstellung des Kopfteils relativ kompliziert, da mit dem Kopfteil die Einstechmittel ausgeformt werden müssen.

Der Erfindung liegt die Aufgabe zu Grunde, die Nachteile des Standes der Technik zu beseitigen und insbesondere einen Kapseladapter anzugeben, der mit geringem Aufwand herstellbar und montierbar ist.

Erfindungsgemäß wird diese Aufgabe durch einen Kapseladapter mit den Merkmalen des Anspruchs 1 gelöst. Vorteilhafte Ausgestaltungen finden sich in den Unteransprüchen.

Bei einem Kapseladapter für einen Siebträger einer Kaffeemaschine, mit einem nach unten offenen Aufnahmeraum für eine Kaffeekapsel, der durch einen Deckel verschließbar ist, wobei der Kapseladapter ein Kopfteil und ein Bodenteil aufweist und der Aufnahmeraum im Bodenteil ausgebildet ist, ist erfindungsgemäß vorgesehen, dass an der dem Kopfteil zugewandten Seite des Bodenteils in den Aufnahmeraum hinein ragende Einstechmittel zum Einstechen in eine im Aufnahmeraum aufgenommene Kaffeekapsel angeordnet sind.

Die Einstechmittel werden also unabhängig vom Kopfteil am Bodenteil positioniert, so dass diese problemlos vormontiert werden können und erst anschließend das Kopfteil mit dem Bodenteil verbunden wird. Dabei kann das Kopfteil zur Anpassung an unterschiedliche Kapseln auch problemlos mit anderen Bodenteilen kombiniert werden, da die häufig speziell für bestimmte Kapseln ausgeformten Einstechmittel mit dem Bodenteil verbunden sind. Es wird also auch eine höhere Variabilität erhalten.

Insbesondere sind drei Einstechmittel vorgesehen, die einstückig miteinander ausgebildet sein können, wobei sie im Wesentlichen senkrecht gegenüber einer gemeinsamen Grundfläche umgebogen sein können, die auf einer Außenseite der dem Kopfteil zugewandten Seite des Bodenteils angeordnet ist. Dies stellt eine sehr stabile und gleichzeitig mit geringem Aufwand herstellbare Ausgestaltung dar. Die Einstechmittel können so aus einem Metallblech durch Ausstanzen und anschließendem Umbiegen hergestellt werden.

Dabei ist besonders bevorzugt, dass die Grundfläche oberhalb zumindest einer Einflussöffnung des Bodenteils angeordnet ist und mindestens eine Öffnung aufweist. Die Grundfläche liegt dabei insbesondere an einer Außenseite des Bodenteils an, wobei die Einflussöffnung mit der Öffnung der Grundfläche fluchtet, so dass Wasser zur Kapsel gelangen kann, die im Aufnahmeraum des Bodenteils angeordnet ist.

Bevorzugterweise sind die Einstechmittel durch Schlitze im Bodenteil geführt. Dadurch kann eine Positionierung und Stützung der Einstechmittel erfolgen, wobei die Einstechmittel ohne zusätzliche Befestigung am Bodenteil gehalten werden können.

In einer bevorzugten Ausgestaltung ist im Kopfteil ein Trichterelement angeordnet, dass eine vom Bodenteil abgewandte Oberseite des Kopfteils verschließt und eine zentrische Öffnung aufweist, durch die Wasser zur Einflussöffnung des Bodenteils führbar ist. Mit Hilfe dieses Trichterelements wird unter Druck stehendes, von der Kaffeemaschine kommendes Wasser gezielt zur Einflussöffnung des Bodenteils geleitet. Ein Totraum zwischen dem Kapseladapter und einer Anschlussfläche der Kaffeemaschine kann dadurch gering gehalten werden. Ferner wird durch die trichterförmige Ausgestaltung erreicht, dass keine nennenswerten Wasserreste nach Ende des Brühvorgangs im Kopfteil verbleiben. Vielmehr fließen diese automatisch zur Einflussöffnung des Bodenteils.

Vorzugsweise ist die Grundfläche mit ihrer zumindest einen Öffnung zwischen der zentrischen Öffnung und der Einflussöffnung angeordnet. Die Grundfläche mit den Einstechmitteln ist damit formschlüssig gehalten und kann so problemlos die zum Eindringen der Einstechmittel in die Kapsel erforderlichen Kräfte aufnehmen und auf das Kopfteil übertragen.

Vorteilhafterweise ist zwischen einer äußeren Umfangsfläche des Trichterelements und einer inneren Umfangsfläche des Kopfteils eine Radialdichtung angeordnet, die insbesondere in einer Ringnut des Trichterelementes gehalten ist. Damit wird sichergestellt, dass von der Kaffeemaschine kommendes Wasser vollständig durch die zentrische Öffnung abgeführt wird und nicht zwischen dem Trichterelement und einer Innenseite des Kopfteils gelangt. Das Trichterelement liegt vielmehr dicht an der inneren Umfangsfläche des Kopfteils an.

In einer bevorzugten Ausgestaltung ist an einer Unterseite des Trichterelements ein Ringkragen ausgebildet, an den insbesondere unter Zwischenlage einer Ringdichtung das Bodenteil anliegt. Zwischen dem Trichterelement und dem Bodenteil wird so eine fluiddichte Verbindung hergestellt.

Vorzugsweise sind das Bodenteil und das Trichterelement mittel Befestigungsmittel aneinander befestigt, die durch Löcher im Kopfteil geführt sind. Das Kopfteil liegt dann mit seiner Bodenfläche, die eine zentrische Durchgangsöffnung für einen Teil des Bodenteils aufweist, zwischen Kopfteil und Bodenteil. Mit Hilfe der Befestigungsmittel, die insbesondere als Schrauben ausgebildet sind, ergibt sich so eine stabile Halterung dieser Elemente aneinander. Da sich das Bodenteil teilweise durch die Durchgangsöffnung des Kopfteils erstreckt, steht ausreichend Platz für den Aufnahmeraum zur Verfügung. Ferner kann das Trichterelement einen relativ kleinen Winkel aufweisen.

In einer bevorzugten Ausgestaltung weist der Deckel eine Vielzahl von Durchlassöffnungen sowie an seiner dem Aufnahmearm zugewandten Innenseite Erhebungen mit Schneidkanten auf. Beim Schließen des Deckels dringen die Erhebungen dann in die Kapsel ein, so dass gebrühter Kaffee austreten und durch die Durchlassöffnungen ausfließen kann. Gleichzeitig wird die Kapsel durch den Deckel gegen die Einstechmittel gedrückt, die die Kapsel dann entsprechend perforieren.

Dabei ist besonders bevorzugt, dass der Deckel klappbar am Bodenteil gelagert ist, wobei der Deckel im geschlossenen Zustand mit dem Bodenteil verrastbar ist. Durch eine klappbare Lagerung ist der Deckel unverlierbar mit dem Bodenteil verbunden und einfach schließbar. Ein Verrasten mit dem Bodenteil kann dann beispielsweise durch das Vorsehen von Rastarmen am Deckel realisiert werden, die in entsprechende Aufnahmen mit Rastvorsprüngen, die im Bodenteil eingeformt sind, eingeführt werden können. Der Deckel wird so sicher in der geschlossenen Stellung gehalten und verhindert ein ungewolltes Herausfallen einer im Aufnahmeraum aufgenommenen Kapsel.

Vorteilhafterweise ist eine äußere Umfangsfläche des Kopfteils bündig mit einer äußeren Fläche des Bodenteils ausgebildet. Der Kapseladapter ist dann ohne störende Stufen problemlos in einen Siebträger einsetzbar und wieder herausnehmbar. Ferner wird ein Verschmutzungsrisiko gering gehalten.

In einer bevorzugten Weiterbildung ist das Bodenteil zumindest teilweise doppelwandig ausgebildet. Die Wandstärke des Bodenteils kann dann gering gehalten werden, wobei auch größere Durchmesserunterschiede zwischen Kapsel und Siebträger ausgeglichen werden können.

Vorzugsweise sind das Bodenteil, der Deckel und/oder das Trichterelement aus Kunststoff, insbesondere als Spritzgussteile, ausgebildet. Diese Elemente sind dann kostengünstig herstellbar und gleichzeitig ausreichend robust.

Ferner ist bevorzugt, dass das Kopfteil aus Metall insbesondere als Tiefziehteil gebildet ist. Dies ermöglicht ebenfalls eine kostengünstige Fertigung. Durch die Ausgestaltung als Metallteil ergibt sich eine verschleißarme Kontaktfläche zum Siebträger und eine hohe mechanische Stabilität.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen in schematischer Ansicht:

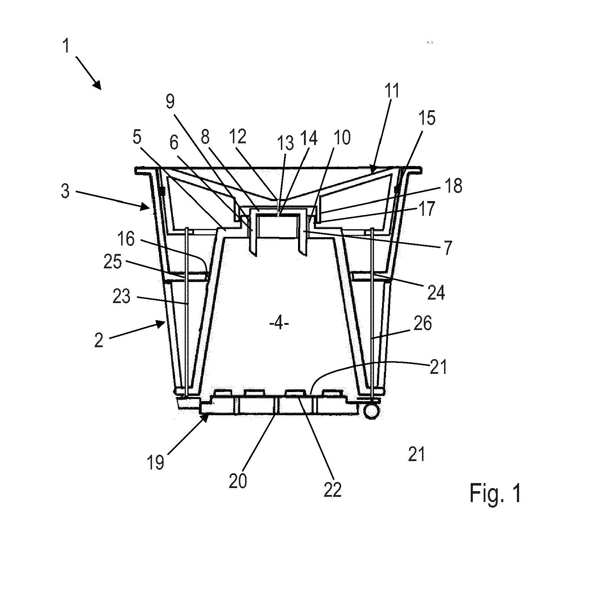

Fig. 1 eine teilgeschnittene Ansicht eines Kapseladapters.

In Fig. 1 ist ein Kapseladapter 1 dargestellt, der in einen Siebträger einer Siebträger-Kaffeemaschine eingesetzt werden kann, um handelsübliche Kaffeekapseln verwenden zu können. Der Kapseladapter 1 weist dabei ein Bodenteil 2 und ein Kopfteil 3 auf, die miteinander verbunden sind. Im Bodenteil 2 ist ein Aufnahmeraum 4 ausgebildet, in dem eine Kaffeekapsel aufnehmbar ist.

An einer dem Kopfteil 3 zugewandten Seite 5 des Bodenteils 2 sind Einstechmittel 6, 7 angeordnet, die über eine gemeinsame Grundfläche 8 miteinander verbunden sind. Dabei liegt die Grundfläche 8 auf einer Außenseite der Seite 5 an, während die gegenüber der Grundfläche 8 um etwa 90° umgebogenen Einstechmittel durch Schlitze 9, 10 in der Seite 5 geführt sind, so dass sie in den Aufnahmeraum 4 hinein ragen.

Im Kopfteil 3 ist ein Trichterelement 11 angeordnet, das eine zentrische Öffnung 12 aufweist. Die zentrische Öffnung 12 des Trichterteils 11 befindet sich dabei in Überdeckung mit einer Öffnung 13 der Grundfläche und einer Einflussöffnung 14 des Bodenteils, so dass heißes, unter Druck stehendes und von der Kaffeemaschine kommendes Wasser vom Trichterteil 11 in den Aufnahmeraum 4 bzw. die darin befindliche Kapsel geleitet werden kann.

Damit kein Wasser zwischen dem Trichterelement 11 und dem Kopfteil 3 eindringen kann, ist zwischen dem Trichterelement 11 und dem Kopfteil 3 eine Radialdichtung 15 angeordnet. Bei einer entsprechend engen Passung zwischen Trichterelement 11 und Kopfteil 3 kann auf eine derartige Radialdichtung gegebenenfalls auch verzichtet werden.

Das Bodenteil 2 erstreckt sich durch eine Durchgangsöffnung 15 im Kopfteil 3 hindurch und ist mit einem ringförmigen Fortsatz 17 innerhalb eines Ringkragens 18 aufgenommen, der an einer Unterseite des Trichterelements 11 ausgebildet ist und die zentrale Öffnung 12 konzentrisch umgibt. Gegebenenfalls kann dabei zwischen dem Ringkragen 18 und dem Fortsatz 17 eine nicht dargestellte Ringdichtung angeordnet sein. Über das Trichterelement 11 gelangt das von der Kaffeemaschine kommende heiße Wasser also direkt in das Bodenteil 2.

Der Aufnahmeraum 4 ist über einen klappbar am Bodenteil 2 gelagerten Deckel 19 verschließbar. Der Deckel 19 weist eine Vielzahl von Durchlassöffnungen 20 auf, durch die gebrühter Kaffee aus der Kapsel bzw. den Aufnahmeraum 4 austreten kann. Dabei sind an einer Innenseite 21 des Deckels 19 Erhebungen 22 mit Schneidkanten angeordnet, die beim Schließen des Deckels eine im Aufnahmeraum 4 angeordnete Kaffeekapsel perforieren. Gleichzeitig wird die Kapsel dabei gegen die Einstechmittel 6, 7 gedrückt, die dabei in die Kaffeekapsel eindringen und so das Eindringen von heißem Wasser ermöglichen.

Der Bodenteil 2 ist über Befestigungsmittel 23, 24, die beispielsweise durch Schrauben gebildet sind, mit dem Trichterelement 11 verschraubt, wobei dadurch gleichzeitig das Kopfteil gehalten wird. Die Befestigungsmittel sind dabei durch Löcher 25, 26 im Boden des Kopfteils geführt, so dass dieser Boden zwischen Trichterelement 11 und Bodenteil 2 eingeklemmt wird. Es ergibt sich somit eine formschlüssige Verbindung.

Bei der Ausgestaltung der Befestigungsmittel 23, 24 als Schrauben können im Trichterelement 11 entsprechende Innengewinde ausgebildet sein. Alternativ können entsprechende Kontermuttern oder Ähnliches vorgesehen werden.

Die Erfindung ist nicht auf eine der vorbeschriebenen Ausführungsformen beschränkt, sondern in vielfältiger Weise abwandelbar. So können beispielsweise drei Einstechmittel vorgesehen werden, die gleichmäßig verteilt auf einer Kreislinie angeordnet sind. Auch können im Trichterelement, der Grundfläche und der Seite des Bodenelements mehrere Öffnungen vorgesehen sein, wobei gegebenenfalls die Öffnung der Grundfläche auch als Sieb ausgestaltet sein kann.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Kapseladapter (1) für einen Siebträger einer Kaffeemaschine, mit einem nach unten offenen Aufnahmeraum (4) für eine Kaffeekapsel, der durch einen Deckel (19) verschließbar ist, wobei der Kapseladapter ein Kopfteil (3) und ein Bodenteil (2) aufweist und der Aufnahmeraum (4) im Bodenteil (2) ausgebildet ist, **dadurch gekennzeichnet, dass** an der dem Kopfteil (3) zugewandten Seite (5) des Bodenteils (2) in den Aufnahmeraum (4) hinein ragende Einstechmittel (6, 7) zum Einstechen in eine im Aufnahmeraum (4) aufgenommene Kaffeekapsel angeordnet sind.

2. Kapseladapter nach Anspruch 1, **dadurch gekennzeichnet, dass** insbesondere drei Einstechmittel (6, 7) vorgesehen sind, die einstückig miteinander ausgebildet sind, wobei sie im Wesentlichen senkrecht gegenüber einer gemeinsamen Grundfläche (8) umgebogen sind, die auf einer Außenseite der dem Kopfteil (2) zugewandten Seite (5) des Bodenteils (2) angeordnet ist.

3. Kapseladapter nach Anspruch 2, **dadurch gekennzeichnet, dass** die Grundfläche (8) oberhalb zumindest einer Einflussöffnung (14) des Bodenteils (2) angeordnet ist und mindestens eine Öffnung (13) aufweist.

4. Kapseladapter nach einem der vorhegenden Ansprüche, **dadurch gekennzeichnet, dass** die Einstechmittel (6, 7) durch Schlitze (9, 10) im Bodenteil (2) geführt sind.

5. Kapseladapter nach einem der vorhegenden Ansprüche, **dadurch gekennzeichnet, dass** im Kopfteil (3) ein Trichterelement (11) angeordnet ist, dass eine vom Bodenteil (2) abgewandte Oberseite des Kopfteils (9) verschließt und eine zentrische Öffnung (12) aufweist, durch die Wasser zur Einflussöffnung (14) des Bodenteils (2) führbar ist.

6. Kapseladapter nach einem der vorhegenden Ansprüche, **dadurch gekennzeichnet, dass** die Grundfläche (8) mit ihrer zumindest einen Öffnung (13) zwischen der zentrischen Öffnung (12) und der Einflussöffnung (14) angeordnet ist.

7. Kapseladapter nach einem der vorhegenden Ansprüche, **dadurch gekennzeichnet, dass** zwischen einer äußeren Umfangsfläche des Trichterelements (11) und einer inneren Umfangsfläche des Kopfteils (3) eine Radialdichtung (15) angeordnet ist, die insbesondere in einer Ringnut des Trichterelementes (11) gehalten ist.

8. Kapseladapter nach einem der vorhegenden Ansprüche, **dadurch gekennzeichnet, dass** an einer Unterseite des Trichterelements (11) ein Ringkragen (18) ausgebildet ist, an den insbesondere unter Zwischenlage einer Ringdichtung das Bodenteil (2) anliegt.

9. Kapseladapter nach einem der vorhegenden Ansprüche, **dadurch gekennzeichnet, dass** das Bodenteil (2) und das Trichterelement (11) mittel Befestigungsmittel (23, 24) aneinander befestigt sind, die durch Löcher (24, 25) im Kopfteil (3) geführt sind.

10. Kapseladapter nach einem der vorhegenden Ansprüche, **dadurch gekennzeichnet, dass** der Deckel (19) eine Vielzahl von Durchlassöffnungen (20) sowie an seiner dem Aufnahmeraum (4) zugewandten Innenseite (21) Erhebungen (22) mit Schneidkanten aufweist.

11. Kapseladapter nach einem der vorhegenden Ansprüche, **dadurch gekennzeichnet, dass** der Deckel (19) klappbar am Bodenteil (2) gelagert ist, wobei der Deckel (19) im geschlossenen Zustand mit dem Bodenteil (2) verrastbar ist.

12. Kapseladapter nach einem der vorhegenden Ansprüche, **dadurch gekennzeichnet, dass** eine äußere Umfangsfläche des Kopfteils (3) bündig mit einer äußeren Fläche des Bodenteils (2) ausgebildet ist.

13. Kapseladapter nach einem der vorhegenden Ansprüche, **dadurch gekennzeichnet, dass** das Bodenteil (2) zumindest teilweise doppelwandig ausgebildet ist.

14. Kapseladapter nach einem der vorhegenden Ansprüche, **dadurch gekennzeichnet, dass** das Bodenteil (2), der Deckel (19) und/oder das Trichterelement (11) aus Kunststoff insbesondere als Spritzgussteile ausgebildet sind.

15. Kapseladapter nach einem der vorhegenden Ansprüche, **dadurch gekennzeichnet, dass** das Kopfteil (3) aus Metall insbesondere als Tiefziehteil gebildet ist.
